# EUROPÄISCHE PATENTSCHRIFT

(11) **EP 1 331 842 B1**
(45) Veröffentlichungstag und Bekanntmachung des Hinweises auf die Patenterteilung: **07.07.2004**
(21) Anmeldenummer: 01992502.3
(22) Anmeldetag: 01.11.2001
(51) Int. Cl.: A01G 9/02, A01G 9/10

(54) **PFLANZGEFÄSS**
PLANT CONTAINER
RECIPIENT POUR PLANTATION

(30) Priorität: 02.11.2000 DE 20019124 U
(43) Veröffentlichungstag der Anmeldung: 06.08.2003
(73) Patentinhaber: Stöver, Hermann, 27239 Twistringen (DE)
(72) Erfinder: Stöver, Hermann, 27239 Twistringen (DE)
(74) Vertreter: Neumann, Günter
(86) Internationale Anmeldenummer: PCT/DE2001/004157
(87) Internationale Veröffentlichungsnummer: WO 2002/035914

(56) Entgegenhaltungen:
- WO-A-00/32392
- CH-A- 660 942
- DE-A- 4 009 463
- DE-A- 4 234 737
- DE-A- 19 532 309
- DE-U- 20 019 124
- FR-A- 998 720
- GB-A- 1 357 969

## Beschreibung

Die Erfindung betrifft ein Pflanzgefäß aus verrottbaren und ökologisch unbedenklichen Materialien, wie sie zur Aufzucht von Jungpflanzen Verwendung finden.

Die DE 82 12 729 U1 offenbart einen Pflanzbehälter für die Aufzucht baumartiger Jungpflanzen, der aus getränkter Bitumenpappe und durch Zusammenfalten oder Zusammenfügen der aus einem Bandmaterial geschnittenen Abwicklung des Behälters hergestellt werden kann. Mit dieser technischen Lösung verbindet sich insbesondere der Nachteil, dass derartige Pflanzbehälter die für die Aufzucht größerer Jungpflanzen erforderliche Stabilität nicht aufweisen und in der Regel vor dem Einpflanzen entfernt werden müssen. Sofern sie nach dem Pflanzen im Boden verbleiben, erschwert die Bitumenpappe eine Durchwurzelung des Mantels und des Bodens. Hinzu kommt, dass Bitumenpappe ökologisch nicht unbedenklich ist.

Aus der DE 195 32 309 A1 ist ein Pflanztopf bekannt, der aus ringförmig gebogenen Matten mit Überlappungszonen gebildet wird, in denen ein Boden eingelegt ist und die aus einem nachwachsenden verrottbaren organischen Fasermaterial bestehen, das mit Zusätzen verfestigt ist. Nach dieser Erfindung weist der aus einer Matte geformte Ringmantel des Pflanztopfes in seinem inneren unteren Bereich einen umlaufenden Bodenträger auf, auf dem ein Boden oder mehere Böden auflegbar sind und bei dem die Überlappungen des Ringmantels durch Steppnähte verfestigt sind.
Dieser Pflanztopf hat zwar den Vorteil, dass er ausschließlich aus einem verrottbaren und schädigungsfreien Material besteht und insofern ökologisch unbedenklich ist; seiner Verwendung für die Aufzucht größerer Pflanzen sind jedoch Grenzen gesetzt, da der Pflanztopf für den Transport von durch längere Aufzucht kultivierten größeren baumartigen Pflanzen nicht die erforderliche Festigkeit für die Aufnahme der in diesen Fällen vorhandenen hohen Drücke aufweist. Außerdem sind der Transport und die Lagerung derartig ausgebildeter Pflanztöpfe mit nicht geringen Kosten verbunden.

Aufgabe der Erfindung ist es daher, ein verbessertes Pflanzgefäß aus verrottbaren und ökologisch unbedenklichen Materialien bereitzustellen, das auch für die Anzucht größerer baumartiger Pflanzen geeignet und ist und das kostengünstig gelagert und transportiert werden kann.

Erfindungsgemäß wird die Aufgabe durch ein Pflanzgefäß mit den Merkmalen des Anspruches 1 gelöst. Vorteilhafte Ausgestaltungen des erfindungsgemäßen Pflanzgefäßes ergeben sich aus den Merkmalen der Unteransprüche 2 bis 4.

Der besondere Vorteil der Erfindung liegt darin, dass das Pflanzgefäß zusammenlegbar ist und erst vor Ort, unmittelbar vor seinem Einsatz, auf einfache Weise zusammengefügt werden kann.
Dadurch sind sowohl ein kostengünstiger Transport, beispielsweise auf Paletten als auch eine kostensparende Lagerung derartiger Pflanzgefäße möglich. Darüber hinaus ist es auch für die Anzucht größerer baumartiger Pflanzen geeignet. Durch das verwendete Geflecht aus Draht oder biologisch abbaubarem Kunststoff ist das Pflanzgefäß auch nach längerer Kultivierungszeit für den Transport derartiger Pflanzen formstabil genug.

Das erfindungsgemäße Pflanzgefäß kann nach der Anzucht zusammen mit der Pflanze in das Erdreich eingebracht werden.
Das verwendete verrottbare Material und das in den Mantel und Boden des Pflanzgefäßes eingebrachte Geflecht aus Draht oder biologisch abbaubarem Kunststoff gewährleistet für den Zeitraum der Anzucht der Pflanzen die notwendige Festigkeit und Formstabilität des Pflanzgefäßes. Es ist wasser- und luftdurchlässig. Selbst in Regionen mit jahreszeitlich bedingten hohen Niederschlagsmengen kann es bei Verwendung des Pflanzgefäßes nicht zu Staunässe und in der Folge nicht zu Wurzelfäulnis und Schimmelbildung kommen.

Mit dem Pflanzgefäß verbindet sich des weiteren der Vorzug einer ungestörten Durchwurzelung. Es vermeidet die Bildung von Drehwurzeln und fördert ein sicheres Anwachsen der Pflanzen am vorgesehenen Standort.
In den Baumschulen erweist sich die Bildung von Drehwurzeln stets als ein besonderes Problem. Derartige Wurzeln wachsen kreisförmig entlang der Pflanzgefäßwand. Nicht selten stehen Pflanzen in den Baumschulen längere Zeit im Pflanztopf und bilden dabei einen dichten Filz gedrehter Wurzeln. Wird dieser Filz bei der Pflanzung nicht entflochten, wirken sich die Drehwurzeln nachteilig auf das Wachstum und die Standfestigkeit der betreffenden Bäume oder größeren Sträucher aus.
Bei dem erfindungsgemäßen Pflanzgefäß kann sich das Wurzelsystem ungestört im Erdreich entwickeln. Bäume und größere Sträucher weisen bereits nach kurzer Zeit eine verhältnismäßig gute Standfestigkeit auf und sind widerstandsfähig gegen Windeinflüsse. Es ist nicht erforderlich, die Wandung des Pflanzgefäßes mit Löchern zu versehen, wie das bei Pflanzgefäßen nach dem Stand der Technik üblich ist, um die Bildung von Drehwurzeln zu verhindern. Die Verrottung setzt beim erfindungsgemäßen Pflanzgefäß zum richtigen Zeitpunkt ein, wenn es in das Erdreich eingebracht wird. Die dem Pflanzgefäß erfindungsgemäß gegebene Formstabilität und Festigkeit ermöglicht in den ersten 1 bis 2 Jahren erforderlichenfalls auch noch einen Standortwechsel.

Wenn Bäume oder größere Sträucher längere Zeit in Baumschulen stehen, wirkt das erfindungsgemäße Pflanzgefäß durch seine aus verrottbarem Material bestehende Wandung zugleich isolierend gegen die für die Wurzelbildung schädliche intensive Sonneneinstrahlung sowie schützend gegen Austrocknen durch Windeinfluß.
Zum anderen können Pflanzen in erfindungsgemäßen Pflanzgefäßen bei längeren Standzeiten in Baumschulen problemlos in größere Pflanzgefäße gemäß der Erfindung umgetopft werden, ohne das bisherige Pflanzgefäß entfernen zu müssen. Vielmehr erhält die Pflanze durch das Umtopfen eine noch größere Stabilität.

Im folgenden soll das erfindungsgemäße Pflanzgefäß an Hand von Zeichnungen näher erläutert werden. Es zeigen:
- Fig. 1: das Pflanzgefäß in aufgeklappter und zusammenfügbarer Form,
- Fig. 2: den Schnitt eines verfestigten Mantels des Pflanzgefäßes

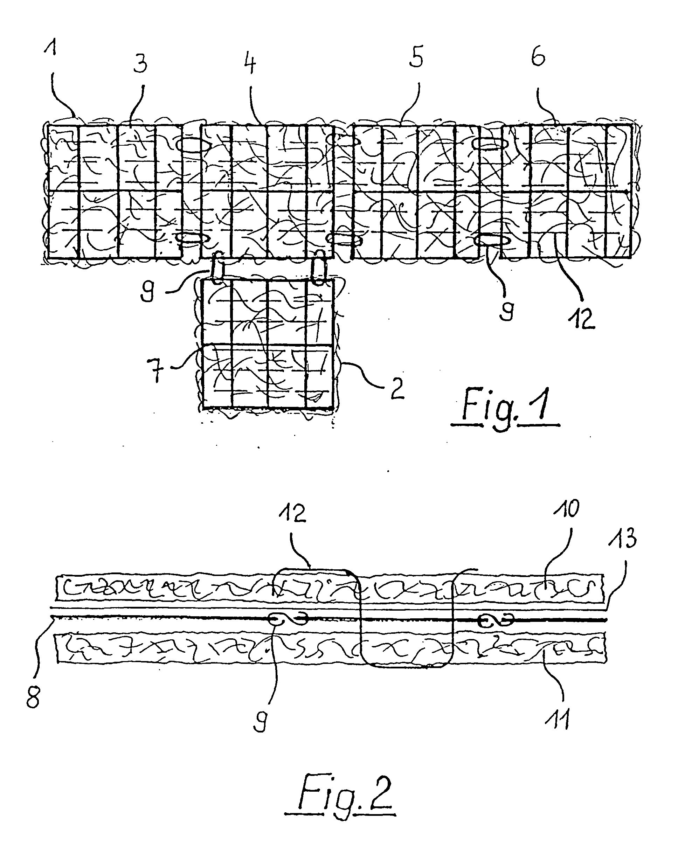

Aus Fig. 1 ist ein Pflanzgefäß in aufgeklappter Form mit dem Mantel 1 und dem Boden 2 zuschnittartig ersichtlich. Das im Mantel 1 und dem Boden 2 angeordnete Geflecht aus Draht oder biologisch abbaubarem Kunststoff wird bei dieser Ausführungsform aus den quadratischen Elementen 3; 4; 5; 6 und 7 der Drahtmatte 8 gebildet, die mittels der Verbindungselemente 9 beweglich miteinander verbunden sind.

In dieser ausgeklappten Form lässt sich der Zuschnitt des Pflanzgefäßes kostengünstig lagern und transportieren und vor Ort problemlos zum fertigen Pflanzgefäß zusammenfügen. Mit an sich bekannten Mitteln, wie Haken oder S-förmig geformten Klammern, werden die Enden des Mantels 1 mechanisch miteinander verbunden und der Boden 2 am Mantel 1 befestigt.

Um die geforderte Festigkeit und Stabilität des Pflanzgefäßes für die aufzunehmenden Lasten und Drücke zu gewährleisten, werden der Durchmesser des Drahtes und die Maschenweite der Drahtmatte 8 je nach der vorgesehenen Größe des Pflanzgefäßes entsprechend dimensioniert.

Im vorliegenden Ausführungsbeispiel gemäß Fig. 2 ist die Drahtmatte 8 von beiden Seiten mit den Kokosmatten 10; 11 versehen. Wie aus dieser Figur ersichtlich ist, sind die Kokosmatten 10, 11 mit der Drahtmatte 8 mittels der aus verrottbarem Material, vorzugsweise aus Jute oder Baumwolle, bestehenden Steppnaht 12, verfestigt. Anstelle der Kokosmatten 10; 11 kann auch ein anderes verrottbares Material eingesetzt werden, wie Holzwolle, ein Gemisch aus Zellstoff und Textilfasern oder aus Jute. Die Kokosmatten 10; 11 können mit der Drahtmatte 8 auch durch Vernadeln, Verkleben oder Verklammern verfestigt werden.

Um zu erreichen, dass insbesondere während der Sommerperiode die Feuchtigkeit während der Anzucht der Pflanzen im Pflanzgefäß gehalten wird, kann im Mantel 1 - wie in Fig. 2 dargestellt - zwischen der Drahtmatte 8 und einer der Kokosmatten 10; 11, hier der Kokosmatte 10, eine Biofolie 13 oder ein Vlies, eine Schicht eines mit Naturfasern verfestigten Papiers oder ein Gewebe aus verrottbarem Material angeordnet sein. Die Anordnung eines Vlieses hat zudem den Vorzug, dass bei der Vorkultivierung die energiereichen Hauptwurzeln der Pflanze die Vlieswand zunächst ohne Probleme durchdringen und durch die durch das Vlies bedingte Restriktion sich viele neue Wurzelansätze ausbilden, die für die spätere Verpflanzung bedeutsam sind. Das sich auf diese Weise bildende kompakte Wurzelgeflecht gibt der Pflanze nach dem Einbringen des Pflanzgefäßes in den Boden schnell den erforderlichen Halt, begünstigt die Aufnahme der Nährstoffe und vermindert so den Verpflanzungsausfall.

Der Mantel 1 und der Boden 2 des Pflanzgefäßes sind leicht und kostengünstig herstellbar. Auf eine Lage der im Herstellungsprozess leicht gepressten Kokosmatte 10 wird die aus den Elementen 3; 4; 5 und 6 bestehende formstabile Matte 8 aus Draht oder biologisch abbaubarem Kunststoff aufgebracht, die wiederum mit einer leicht gepressten Kokosmatte 11 abgedeckt wird.

Mittels längs verlaufender Steppnähte 12 werden die Matten 10; 11 mit der Drahtmatte 8 verfestigt und wird danach der Mantel 1 entsprechend der vorgesehenen Abmessung aus der Kokosmattenbahn herausgetrennt. Die Trennung kann auch so vorgenommen werden, dass ein Teil der Kokosmatte 10; 11 über die Drahtmatte 8 hinausgeführt wird, damit der Mantel 1, wenn das Pflanzgefäß vor Ort aus dem Zuschnitt hergestellt wird, überlappend zusammengefügt werden kann. Über den oberen Rand des Mantels 1 hinausragende Kokosmatte kann nach innen eingeschlagen und mit der Wandung des Mantels versteppt werden.

Der Boden 2 des Pflanzgefäßes wird analog gefertigt und kann in verschiedenen Ausführungsformen ausgebildet sein. Er kann kreisförmig, ellipsenförmig oder mehreckig hergestellt werden. Paßfähig zur Form des Bodens 2 wird der Mantel 1 des Pflanzgefäßes ausgeführt. Bei einem kreisrunden Boden ist er ringförmig gebogen, wenn das Pflanzgefäß eine konische Form erhalten soll. Bei einer mehreckig gestalteten Bodenform weist der Mantel eine dementsprechende rechteckige Form auf, wobei die Elemente der Drahtmatte 8 des Mantels 1 mit dem Element der im Boden 2 angeordneten Drahtmatte paßfähig ausgeführt sind.

Das erfindungsgemäße Pflanzgefäß zeichnet sich besonders durch Robustheit und Formstabilität aus. Es ist daher auch für Pflanzmaschinen und -geräte sowie Gabelstapler geeignet. Es erweist sich insofern als ein sehr wirksames Mittel zur Rationalisierung der Arbeitsprozesse, insbesondere in Baumschulen.

### Bezugszeichenaufstellung

- 1: Mantel
- 2: Boden
- 3: Element der Drahtmatte 8
- 4: Element der Drahtmatte 8
- 5: Element der Drahtmatte 8
- 6: Element der Drahtmatte 8
- 7: Element der Drahtmatte 8
- 8: Drahtmatte
- 9: Verbindungselement
- 10: Kokosmatte
- 11: Kokosmatte
- 12: Steppnaht
- 13: Biofolie

## Patentansprüche

1. Pflanzgefäß, verrottbare und ökologisch unbedenkliche Materialien, enthaltend zusammenfügbar aus einem Boden (2) und einem daran angeordneten Mantel (1) , jeweils ein formstabiles Geflecht oder Gitter aufweisend, verfestigt mit an dem formstabilen Geflecht oder Gitter angebrachten verrottberen organischem Material, **dadurch gekennzeichnet, dass**
- das verrottbare organische Material durch Versteppen, Vernadeln oder Verklammern an dem formstabilen Geflecht oder Gitter angebracht ist;
- das formstabile Geflecht oder Gitter aus mehreren gelenkig miteinander verbundenen Elementen (3; 4; 5; 6; 7) besteht und
- die miteinander verbundenen Elemente (3; 4; 5; 6) eine formstabile Matte (8) aus Draht oder biologisch abbaubarem Kunststoff bilden.

2. Pflanzgefäß nach Anspruch 1, **dadurch gekennzeichnet, dass** der Boden (2) mit dem Mantel (1) und die Enden des Mantels (1) mittels Haken oder S-förmig geformten Klammern miteinander verbunden sind.

3. Pflanzgefäß nach Anspruch 1 oder 2, **dadurch gekennzeichnet, dass** das verrottbare organische Material eine Kokosmatte (10;11), Holzwolle oder ein Gemisch aus Zellstoff und Textilfasern ist.

4. Pflanzgefäß nach einem der Ansprüche 1 bis 3, **dadurch gekennzeichnet, dass** zwischen dem formstabilen Geflecht oder Gitter und dem daran befestigten verrottbaren organischen Material eine Biofolie (13), ein Vlies, ein Gewebe aus verrottbarem Material oder eine Schicht aus mit Naturfaser verfestigtem Papier angeordnet ist.

## Claims

1. Plant container, comprised of decayable and ecologically safe materials consisting of a bottom (2) and a casing (1) attached to this, both of which have a dimensionally stable weave or grid, stabilized with dimensionally stable weave or grid decayable, organic material **characterized by**
- the decayable organic material is attached to the dimensionally stable weave or grid by backstitching, nailing or stapling;
- the dimensionally stable weave or grid consists of several elements attached loosely with one another (3; 4; 5; 6; 7) and
- the elements attached to on another (3; 4; 5; 6) form a dimensionally stable mat (8) of wire or biologically decayable plastic.

2. Plant container in accordance with claim 1 **characterized by** the bottom (2) with the casing (1) an the ends of the casing (1) are connected to one another by means of hooks or s-shaped clamps.

3. Plant container in accordance with claims 1 or 2 **characterized by** the decayable organic material is a coconut mat (10; 11), excelsior or a mixture of cellulose an textile fiber.

4. Plant container in accordance with claims 1 or 3 **characterized by** a bio-foil (13), a fleece, a fabric out of decayable material or a layer of paper solidified with natural fiber being placed between the dimensionally stable wire mesh or biologically degradable plastic.

## Revendications

1. Conteneur pour plantes comprenant des matières putréfiables et sans danger pour l'environnement, qui se compose d'un fond (2) et d'une enveloppe intérieure (1) disposée sur celui-ci présentant tous les deux un tissage ou grillage indéformable, et qui est stabilisé par une matière organique putréfiable placée sur le tissage ou grillage indéformable, **caractérisé en ce que**
- la matière organique putréfiable est placée sur le tissage ou grillage indéformable en y étant cousue, clouée ou agrafée ;
- le tissage ou grillage indéformable se compose de plusieurs éléments (3;4;5;6;7) reliés les uns aux autres de façon à pouvoir s'articuler et
- les éléments (3;4;5;6) reliés les uns aux autres forment un tapis indéformable (8) composé de fil de fer ou de matière plastique biodégradable.

2. Conteneur pour plantes selon la revendication 1, **caractérisé en ce que** le fond (2) avec l'enveloppe intérieure (1) et les extrémités de l'enveloppe intérieure (1) sont reliés ensemble au moyen de crochets ou d'agrafes en forme de S.

3. Conteneur pour plantes selon la revendication 1 ou 2, **caractérisé en ce que** la matière organique putréfiable est un tapis de coco (10;11), de la laine de bois ou un mélange de cellulose et de fibres textiles.

4. Conteneur pour plantes selon l'une quelconque des revendications 1 à 3, **caractérisé en ce qu'**un film biodégradable (13), un non-tissé, un tissé de matière putréfiable ou une couche de papier renforcé par fibres naturelles est disposé entre le tissage ou grillage indéformable et la matière organique putréfiable fixée sur celui-ci.
